# EUROPEAN PATENT SPECIFICATION

(11) **EP 1 721 528 B1**
(45) Date of publication and mention of the grant of the patent: **13.02.2008**
(21) Application number: 05425323.2
(22) Date of filing: 13.05.2005
(51) Int. Cl.: A21D 13/00, A23G 3/02, A23G 3/20

(54) **Confectionery food product of the biscuit-like type, method and apparatus for the production thereof**
Keksähnliches Süsswarenprodukt, Verfahren und Vorrichtung zu dessen Herstellung
Produit de confiserie du type biscuit, procédé et dispositif pour sa production

(43) Date of publication of application: 15.11.2006
(73) Proprietor: BARILLA G. E R. FRATELLI S.p.A., 43100 Parma (IT)
(72) Inventor: Giovanetti, Marco, Barilla G. e R. Fratelli S.p.A., 43100 Parma (IT); Buriani, Ernesto, Barilla G. e R. Fratelli S.p.A., 43100 Parma (IT)
(74) Representative: Zambardino, Umberto

(56) References cited:
- EP-A- 1 447 011
- US-A- 4 394 395
- US-B1- 6 270 818

## Description

### Field of application

The present invention refers, in general, to the technical field of the food industry.

In particular, the present invention concerns a confectionery product of the biscuit type particularly suitable as breakfast and/or snack products for children and kids.

The present invention also concerns a process and an apparatus for the production of such a confectionery product.

### Prior art

Various types of bakery confectionery breakfast and/or a snack products particularly aimed at children and kids have long been known. Amongst these confectionery products, of substantial importance are biscuits, which are produced in various shapes and sizes. In some cases they exhibit surface decorations made of the biscuit itself or of other edible materials, such as for example animal or cartoon character shapes, letters, numbers, etc. so as to be more appealing to the end consumer, children and kids in particular.

US 6, 270, 818 B1 discloses an animated food composed of an inner non-dispersible solid edible mass encased in an outer water dispersible solid edible mass.

It is known that the aforementioned biscuits can be consumed as such (i.e. dry) or in association with hot or tepid watery drinks, such as milk, particularly for breakfast or as a snack.

Although conventional biscuits have well-recognized organoleptic and nutritional qualities, there is still a requirement in the field of the food industry to provide new types of confectionery products of the biscuit type having good organoleptic and nutritional qualities, that are appealing to the end consumers, particularly children and kids, and which can be obtained through simple and cost-effective processes which can be carried out without any substantial alteration of the organoleptic characteristics of the food ingredients used in their production.

The technical problem forming the basis of the present invention is therefore that of providing a confectionery food product of the biscuit type and a related production process which satisfies at least some of the aforementioned requirements.

### Summary of the invention

Such a problem has been solved, according to the invention, by a confectionery product comprising a core consisting of a bakery product particulate and a food coating of said core characterized in that said coating is sintered onto said core.

The term "sintering" is to be understood to mean the well-known technology that enables to compact powders from different materials by using suitable temperatures and pressures.

Preferably, the weight ratio of the core to the food coating is comprised between 1:1 and 1:5.

Preferably, said bakery product particulate is a biscuit fragment, for example a shortbread biscuit fragment.

Preferably, said food coating is soluble in watery drinks.

Preferably, said coating comprises powders of a food preparation sintered on said core.

Preferably, the aforementioned food preparation comprises cocoa and sugar.

The confectionery product according to the invention exhibits excellent organoleptic properties that can be appreciated both when it is consumed as a dry biscuit and when it is consumed in association with a watery drink, for example milk.

In particular, the confectionery product according to the invention particularly appeals to the end consumers, children and kids particularly, when it is consumed together with a watery drink.

In fact, when the confectionery product according to the invention is soaked into a watery drink, the coating that constitutes its outer part can quickly dissolve in said drink freeing the inner part, for example a biscuit fragment, as a surprise.

This advantageously constitutes a new element of attraction and fun associated with the consumption of the product itself for the children and kids for whom the confectionery product according to the invention is particularly intended.

Advantageously, the confectionery product according to the invention can be manufactured so as to have a greater overall specific weight (core + coating) than that of the watery drinks which it is intended to be associated with whereas the core itself can have a lower specific weight.

In this situation, the confectionery product according to the invention will sink to the bottom in the watery drink immediately after having been dropped into it whereas the core freed by the dissolving of the food coating will surface from said watery drink giving a pleasant surprise effect.

It should also be noted that the food coating, once it is dissolved in the watery drink, advantageously modifies and/or enhances the organoleptic characteristics of said drink transforming it, for example, into a sweet drink and/or modifying its colour in a way similar to what happens when conventional powdered food preparations are stirred into a conventional drink, for example milk.

This, on the one hand, makes the confectionery product according to the invention more pleasant to consume in association with a watery drink and, on the other hand, can increase the "fun" effect associated, for example, with the colour change of the watery drink.

From what has been stated above, it is also clear that the confectionery product according to the invention is advantageously a polyvalent product, managing in fact at the same time both the function of a breakfast or snack product as well as the function of enhancer of the organoleptic properties of the watery drinks which it is associated with in the same way as conventional powdered food preparations designed to be dispersed in conventional drinks.

The present invention also concerns a process for the production of the confectionery product described above. Such a process comprises the steps of:
- loading a first dosed amount of powders of a food preparation into a plurality of moulds,
- loading a bakery product particulate of predetermined size into each mould of said plurality of moulds,
- loading a second dosed amount of powders of said food preparation into said plurality of moulds on said bakery product particulates,
- forming a plurality of confectionery products through sintering of said powders of the food preparation on said bakery product particulates in the respective moulds.

Preferably, said bakery product particulate is a biscuit fragment, for example a shortbread biscuit fragment.

Preferably, said food preparation is soluble in a watery drink.

Preferably, the aforementioned food preparation comprises cocoa and sugar.

In accordance with the invention, the sintering step is preferably carried out by compressing the powders of the food preparation and the bakery product particulates, for example biscuit fragments, in the respective moulds at a pressure of between 10 and 30 bar and at temperatures no greater than 70°C, preferably between 40 and 70°C.

This process offers the advantage of not requiring harsh treatments, but rather a moderate treatment, which does not involve chemical, but only physical modifications of the starting food materials. This allows to preserve the original organoleptic properties of the ingredients that constitute such food materials and in particular any biological activity they may have (for example vitamins, live starter cultures, etc.).

Moreover, thanks to the combined action of the temperature and of the compression, the forming times by sintering are rather short (from 10 to 120 seconds) making the process according to the invention overall very fast. The process according to the invention is also very versatile, as it can be modified according to need.

This process also offers the advantage that powdered raw materials of various types can be aggregated and components even very heterogeneous in properties and characteristics may be combined.

Preferably, the food preparation is obtained through mixing of the desired ingredients and subsequent milling of the resulting mixture so as to obtain the powders. The milling is carried out with per se conventional machinery, for example with a centrifugal mill, until powders of predetermined granule size, preferably between 50 and 150 microns, are obtained.

Advantageously, the process according to the invention enables the use as particulates of biscuit fragments deriving from the waste of other processes, which would otherwise go completely lost, with loss in the overall cost-effectiveness of production. This is of a certain importance when the wastes are of some account but it also allows to recycle food products that are often classified as "waste" or "second choice" products simply because they are obtained at the end of the process with anomalies (sometimes minimal) for example in shape with respect to the similar products that, on the other hand, satisfy the standards of said processing, whilst still substantially possessing the same organoleptic and/or nutritional characteristics as these latter products.

Preferably, the confectionery products are obtained after sintering with a substantially spherical shape with a core consisting of a fragment of biscuit or similar bakery product of substantially spherical or cylindrical shape.

The present invention also concerns an apparatus for manufacturing the confectionery products described above. Such an apparatus comprises:
- a plurality of cross-members each carrying a plurality of moulds in respective seats, each cross-member being bound and conveyed by chains,
- a plurality of dispensers to inject powders of a food preparation and a bakery product particulate in each of said moulds,
- a sintering station comprising means for compressing said powders of a food preparation and said bakery product particulates in the respective moulds, thus obtaining said confectionery products,
- means of extracting said confectionery products from the respective moulds.

Further characteristics and advantages will become clearer in the following detailed description of an apparatus for the manufacture of confectionery products according to the invention and from some examples of manufacture of said confectionery products, said description and said examples being given for indicative and non limiting purposes with reference to the annexed figures.

### Brief description of the figures

In the figures:

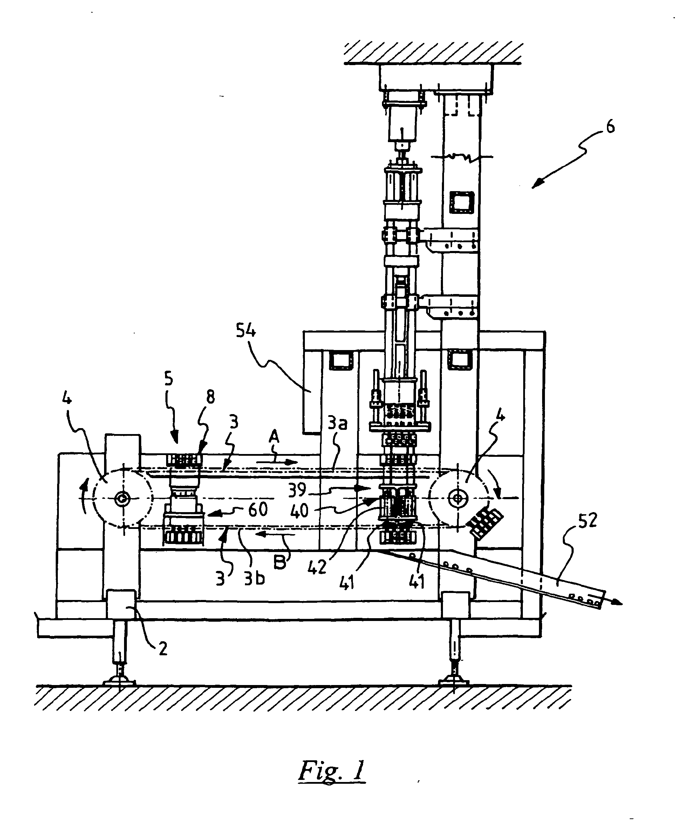

- figure 1 shows a side view of an apparatus for the production of confectionery products according to the present invention;

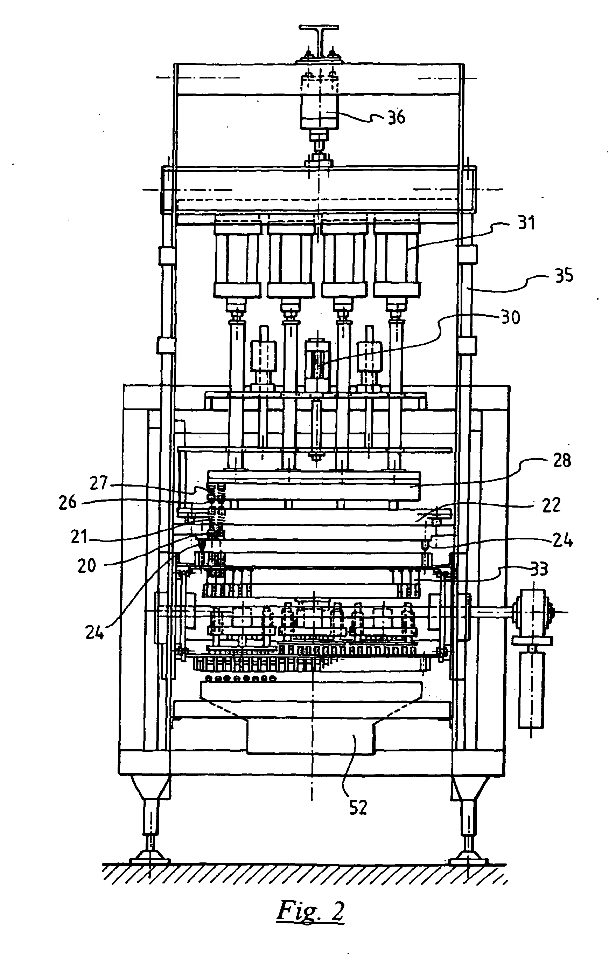

- figure 2 shows a front view of the apparatus of figure 1;
- figures 3a-3d show a front view of a detail of the apparatus of figure 1 in different steps of its operation;

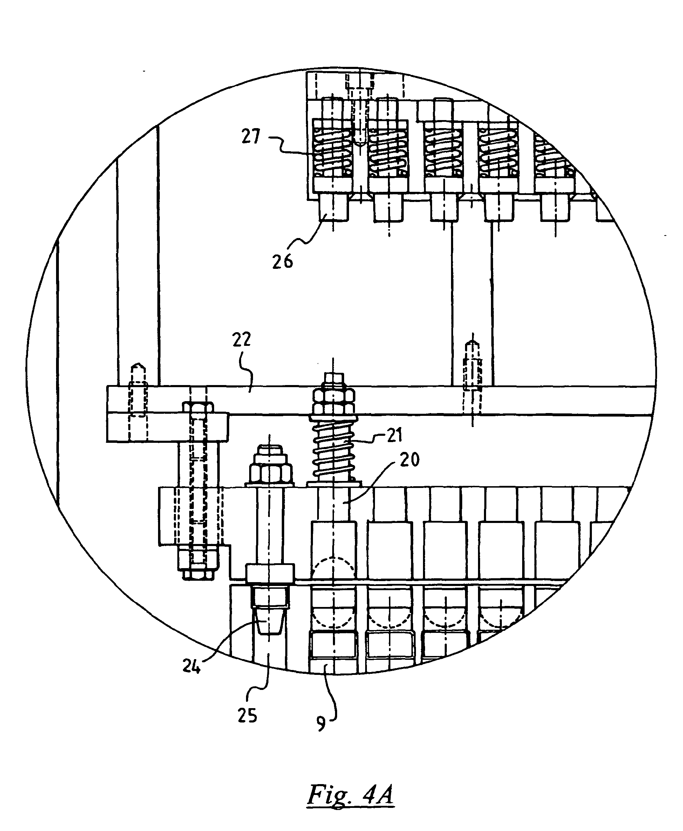

- figure 4a shows a front view of an enlarged detail of the apparatus during the operative step illustrated in figure 3c;

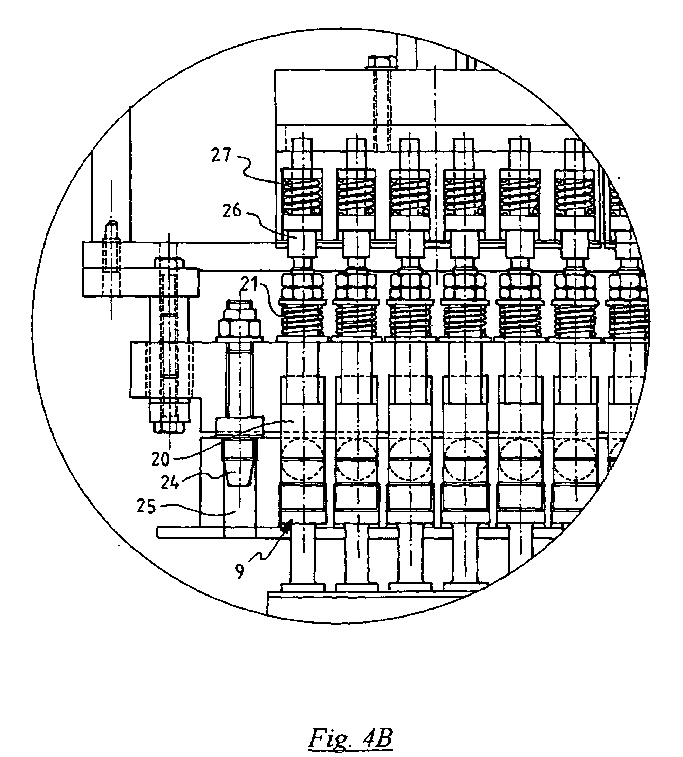

- figure 4b shows a front view of an enlarged detail of the apparatus during the operative step illustrated in figure 3d;
- figure 5 shows a perspective view of an exploded detail of the apparatus of figure 1;

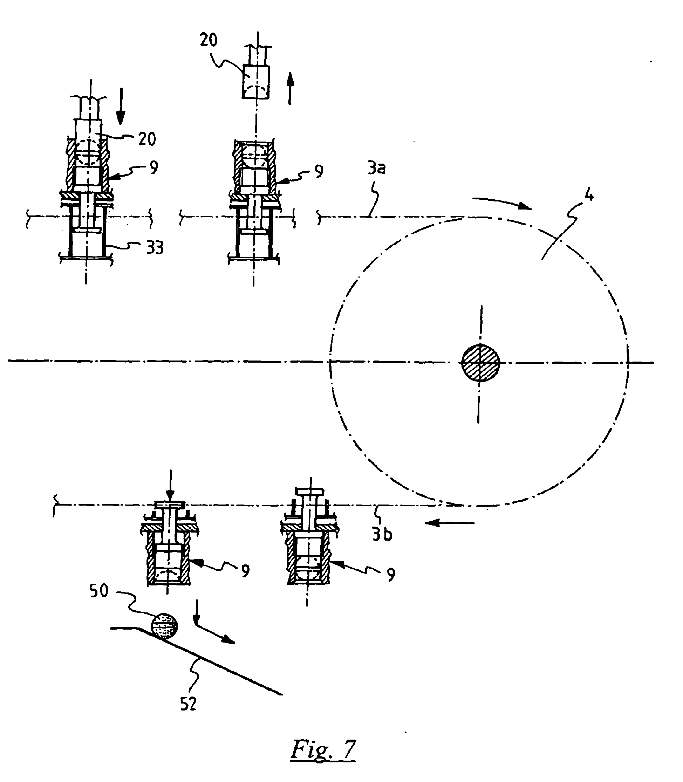

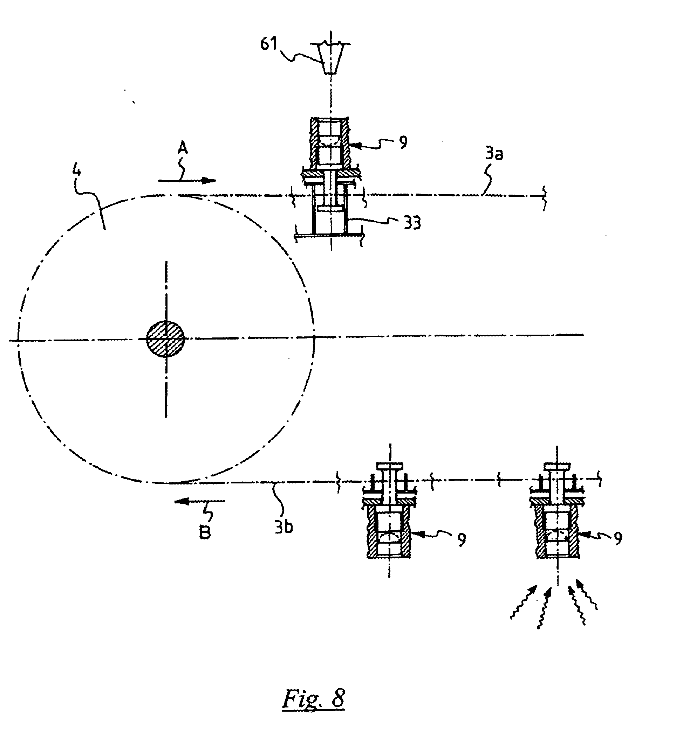

- figures 6 to 8 show a side view of the apparatus of figure 1 during some steps of the process according to the invention.

### Detailed description of the invention

With reference to the aforementioned figures, an apparatus for the production of confectionery products according to the invention is globally indicated by 1.

The apparatus 1 comprises a frame 2 on which are supported two substantially parallel chains 3 made to move between toothed wheels 4, and a sintering station globally indicated by 6.

Each chain 3 has an upper track 3a having forward direction A directed towards the sintering station 6, and a lower track 3b with forward direction B parallel to the direction A of the upper track but in the opposite specific direction.

The apparatus 1 also comprises a plurality of mould-carrying cross-members 8 arranged in series and hinged onto the chains 3 so as to be in integral movement with them, said mould-carrying cross-members 8 carrying a plurality of seats 15 for respective forming moulds 9 of the confectionery products according to the invention.

More specifically, the mould-carrying cross-members 8 with the respective moulds 9 are conveyed on the upper tracks 3a of the chains 3 from a loading station 5 of powders of a food preparation and of bakery product particulates, for example biscuit fragments, to the sintering station 6 in which the confectionery products according to the invention are formed.

On the lower tracks 3b of the chains 3, the mould-carrying cross-members 8 with the respective moulds 9 are conveyed substantially from an extracting station 39 of the confectionery products formed after sintering from the moulds 9 to a cleaning station 60 of said moulds, in the way that will be better described hereafter, thus ending a production cycle of the confectionery products according to the invention.

The moulds 9 comprise a substantially cup-shaped portion 10 in which an open chamber 11 is formed and a stem 12, which extends below said cup 10 terminating with a stop 13.

The open chamber 11 is intended to receive powders of a food preparation and a bakery product particulate, for example a biscuit fragment, for sintering in the way that will be better described hereafter.

The cup 10 is arranged in a respective perforated seat 15 of a mould-carrying cross-member 8 so as to rest on the bottom thereof with the stem 12 extending below the seat 15 passing through a bore (not shown) on the bottom of the seat 15. In particular, the stem 12 is free to slide through the aforementioned bore for example when the mould 9 is overturned at the passage of the respective cross-member 8 on the lower tracks 3b of the chains 3, In this circumstance, the stop 13 prevents the mould 9 from coming out of the respective seat 15.

Moreover, the seat 15 is countersunk at the bottom so as to form a space 15a for the deposit of any powder of a food preparation spillage during processing from the forming chamber 11 or that have not been correctly inserted in such a forming chamber 11 during dispensing. In such a way the risk of a blockage of the moulds 9 in the respective seats 15 is substantially reduced, thus increasing the reliability of the apparatus 1 according to the invention.

Preferably, the mould-carrying cross-members 8 are made in anticorodal aluminium, which offers the advantage of being lighter and more hygienic.

The moulds 9 are preferably made in bronze with the inner walls of the open chamber 11 covered with a layer of non-stick material for food, preferably Teflon.

The sintering station 6 comprises a plurality of counter-moulds 20 arranged in series above the moulds 9 and elastically supported, by elastic means, on a frame 22. The elastic means are preferably in the form of a plurality of return springs 21, one for each counter mould 20. The counter moulds 20 are equal in number to the moulds 9 and can be operated together vertically, by a per se conventional pneumatic cylinder 30, between a rest position in which they are in a predetermined spaced relationship from the moulds 9 of a cross-member 8 entering the sintering station 6 and an operative position in which they are positioned closed upon said moulds 9.

The counter moulds 20 are substantially of the same shape and size as the moulds 9 and more precisely they comprise a cup-shaped portion 20a facing towards a corresponding cup-shaped portion 10 of a mould, and a stem 20b on which the elastic means 21 are wound.

In each cup-shaped portion 20a of a counter mould 20 an open chamber 23 of substantially equivalent size to that of an open chamber 11 of a corresponding mould 9 is defined. During sintering, as will become clearer hereafter, each counter mould 20 is pushed to abut against a respective mould 9 so that the aforementioned chambers 11 and 23 together create a closed forming chamber in which the powders of the food preparation and the particulate are compressed thus obtaining a confectionery product 50 according to the invention. The product 50 thus obtained is similar to a biscuit with a shape determined by the shape of said forming chamber which, in turn, depends upon the shape of the chambers 11 and 23.

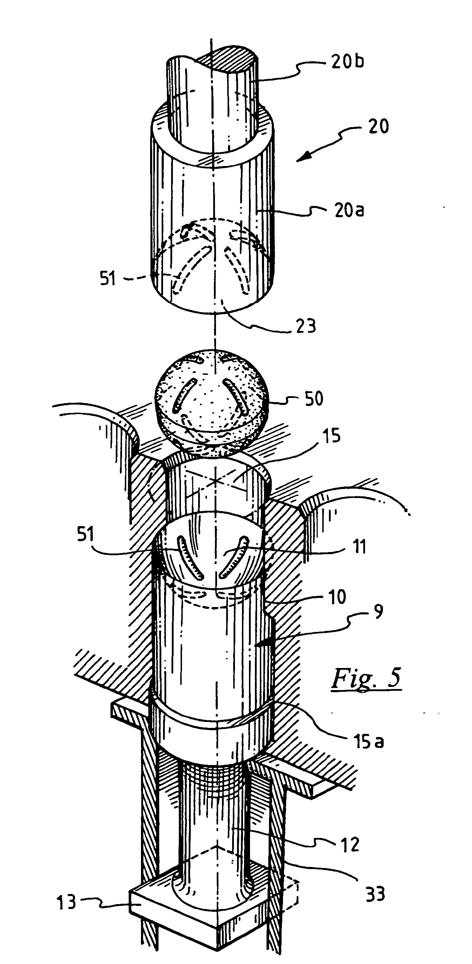

In a preferred embodiment of the apparatus according to the invention, better illustrated in figure 5, the chambers 11 and 23, respectively, of the moulds 9 and of the counter moulds 20 are both substantially semi-spherical in shape and consequently the confectionery products 50 are substantially spherical in shape.

Moreover, the moulds 9 and/or the counter moulds 20 can exhibit shapes 51 in relief formed in the respective open chambers 11 and 23, which are transferred to the confectionery products of the invention during the compression of the powders and of the particulates. In the embodiment shown in figure 5, the shapes 51 are formed in both chambers 11 and 23 in high-relief but they could also be formed in low-relief.

In the sintering station 6, in order to ensure the correct centring of the counter moulds 20 on the moulds 9, the support frame 22 is also provided with two opposite end pins 24 that, in the approaching step of the counter moulds 20 to the moulds 9 to reach the aforementioned operative position, engage in respective seats 25 formed on the cross-members 8.

Moreover, to ensure that the moulds 9 of a cross-member entering the sintering station 6 are in the correct position in the respective seats 15, the sintering station 6 is also provided with a plurality of substantially T-shaped rod-shaped elements 33 arranged in series and situated below the cross-members 8 entering the sintering station so as to have a free end portion of the T between the stems 12 of the moulds 9 of said cross-members 8. The rod-shaped elements 43 can be actuated vertically in a conventional manner between a raised rest position and a lower operative position in which they hook on to stops 13 of respective moulds 9 that are in a raised position that is not suitable for sintering pulling them down into the respective seats 15.

The sintering station 6 also comprises a plurality of pushers 26 arranged in series above the counter moulds 20, the same as them in number. Each pusher 26 is elastically supported, by elastic means on a frame 28. The elastic means are in the form of a plurality of springs 27 of calibrated force, one for each pusher 26.

The pushers 26 can be vertically controlled in groups by respective pneumatic cylinders 31, per se conventional, between a rest position in which they are in a predetermined spaced relationship from the counter moulds 20 and an operative position in which they abut with a predetermined amount of pressure on the respective counter moulds 20 previously brought into their operative position. Therefore, the counter moulds 20 pushed by the respective pushers 26 in turn abut with pressure on the moulds 9 achieving the desired compression of the powders of the food preparation and of the particulates in the respective forming chambers defined by the counter moulds 20 and by the moulds 9.

The amount of the pressure of the pushers 26 on the counter moulds 20 is adjusted by suitably calibrating the elastic means associated with the pushers 26, in other words the springs 27.

The sintering station 6 also comprises a frame 35 that can be actuated vertically by a per se conventional pneumatic cylinder 36 and which is provided with a plank 38 transversal to the chains 3 to effectively support the moulds 9 of a cross-member 8 during the sintering counteracting the pressing force exercised by the pushers 26/counter moulds 20 assembly on the respective moulds 9.

It should also be noted that the station 6 is kept at a predetermined sintering temperature through suitable means, for example a fan 54 that blows hot air inside such a station.

The apparatus 1 according to the invention also comprises a plurality of devices globally indicated by 40 for the extraction from the moulds 9 of confectionery products 50 formed after sintering, said devices 40 being associated with each mould carrying cross-member 8 on the side opposite the seats 15 of the moulds 9.

In the present embodiment, each device 40 comprises a pair of juxtaposed plates 41 that extend in the direction of longitudinal extension of the respective cross-members 8. The plates 41 of each pair can be actuated by respective pneumatic cylinders 42 between a raised rest position and a lowered operative position in which they go into percussion against plates 13 of overturned moulds 9 situated on a cross-member 8 conveyed by lower tracks 3b of the chains 3.

More specifically, the apparatus 1 is adjusted in such a way that whenever a mould carrying cross-member 8 is in the sintering station 6, the plates 41 of the extraction devices 40 associated with it can be actuated so as to go into percussion against overturned moulds 9 of an underlying cross-member 8 situated on the lower tracks 3b of the chains 3. Said percussion causes the detachment of the confectionery products 50 formed by sintering according to the invention and contained in the overturned moulds 9, said confectionery products 50 being collected on a chute 52 to then be sent to the subsequent processing stations, for example to a packaging station.

The apparatus 1 also comprises a cleaning station 60 of moulds of cross-members 8 situated on the lower tracks 3b of the chains 3 that have passed the extraction station 39 of the confectionery products 50 according to the invention.

In the cleaning station 60, such cross-members 8 are hit by an air flow to remove at least part of the powders possibly present in the deposition spaces of the seats 15 of the moulds 9 and thus prepare said cross-members 8 for a subsequent production cycle.

The operation of the apparatus 1 according to the invention throughout a production cycle will now be described in greater detail.

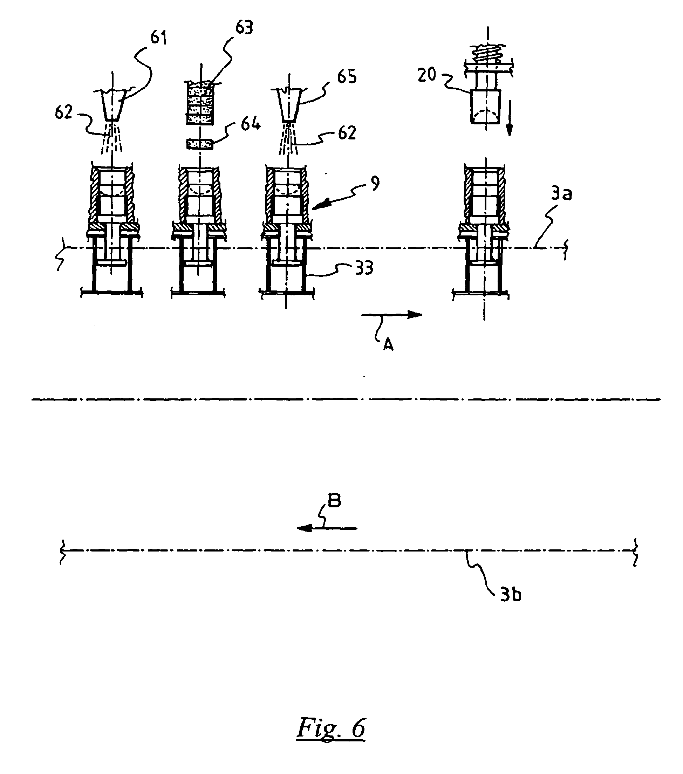

The production cycle begins with the loading of the powders of a food preparation and of bakery product particulates in the moulds 9 of the cross-members 8. This is carried out in the loading station 5 by suitable dispensers as schematically shown in figure 6.

In this regard, the apparatus 1 comprises, in succession, a first volumetric dispenser 61 to deposit a predetermined amount of powders 62 of a food preparation into the moulds 9, a tower dispenser 63 to inject a particulate 64, for example a biscuit fragment, into each mould 9 and a second dispenser 65 to deposit a predetermined amount of powders 62 of said food preparation.

The cross-members 8 with the moulds loaded with the powders 62 and the particulates 64 in succession reach the sintering station 6 where the forming of the products according to the invention takes place.

The sintering is achieved substantially in four steps.

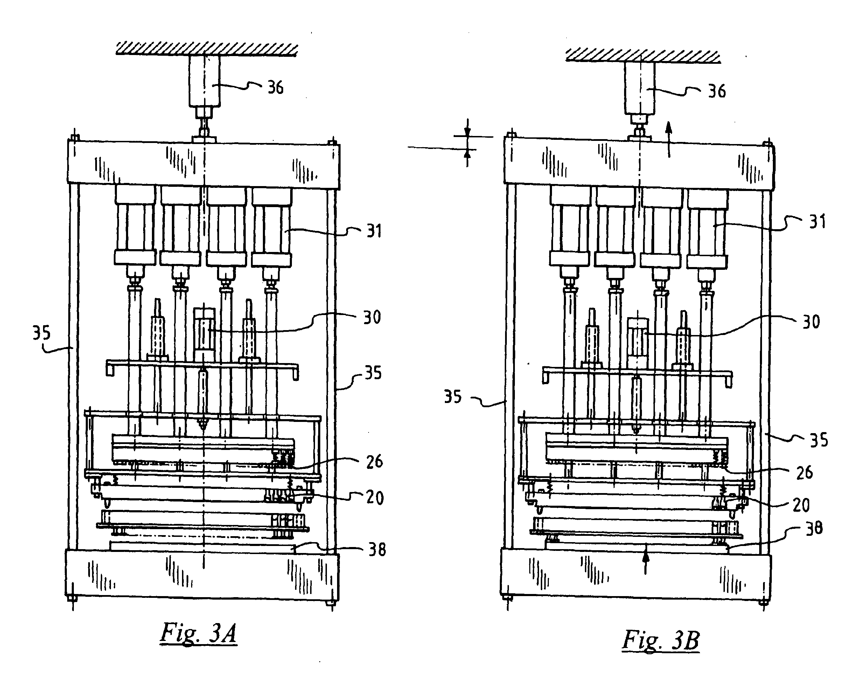

In a first step (fig. 3A), a cross-member 8 with the respective moulds 9 enters the sintering station 6; at the same time the pushers 26 and the counter moulds 20 moved respectively by the pneumatic cylinders 31 and by the pneumatic cylinder 30 are taken from their operative positions to their rest positions. At the same time, the frame 35 of the station 6 is lowered by means of the pneumatic cylinder 36.

In the second step (fig. 3B), the frame 35 of the station 6 is raised by means of the pneumatic cylinder 36 so as to take the plank 38 into a position of support of the moulds 9 of said cross-member 8. Possibly, in this step the rod-shaped elements 33 are at the same time moved into their lowered operative position so as to push the moulds 9 down into the respective seats 15 and then taken back into their rest position.

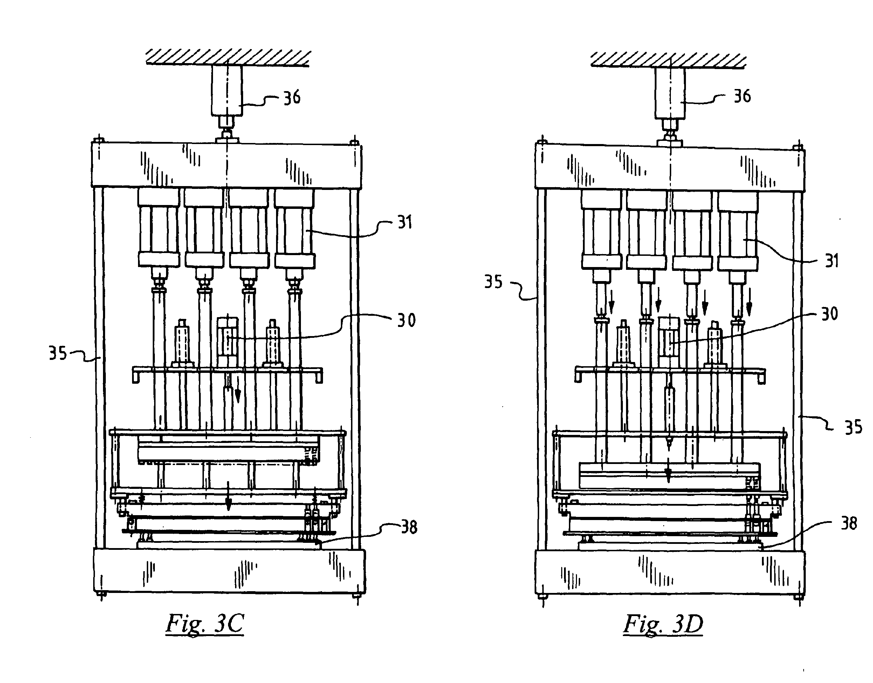

In the third step (fig. 3C), the counter moulds 20 are moved into their operative position against the respective moulds 9 by means of the pneumatic cylinder 30.

In the fourth step (fig. 3D) the sintering is carried out. The pushers 26 moved by the respective pneumatic cylinders 31 are brought into their operative position in abutment with pressure against the counter moulds 20, which in turn abut with pressure on the moulds 9 thus effecting the compression of the powders 62 and of the particulates 64 therein, thus obtaining the confectionery products according to the invention.

The aforementioned steps are repeated for each cross-member 8 entering the sintering station 6.

At this point the cross-members 8 exiting the sintering station 6 the moulds of which contain the confectionery products 50 continue their path on the lower tracks 3b of the chains 3 where in succession they reach the extracting station 39.

Here, the moulds 9 of a cross-member 8 are percussed by the plates 41 of the extraction devices associated to another cross-member 8 entering the sintering station 6. Such percussion causes the confectionery products 50 to detach from the respective moulds 9 and to fall onto the collecting chute 52.

The cross-members 8 exiting the extraction station then reach the cleaning station 60 where they are hit by an air flow for the removal of the possible powders 62 from the seats 15 of the moulds 9.

The cross-members exiting the cleaning station 60 are then conveyed on the upper track 3a of the chains 3 to the loading station for a subsequent production cycle.

### EXAMPLE

A food preparation was prepared by homogeneously mixing powders of the ingredients shown in the following table together with the relative weight percentages.

| | |
|---|---|
| Dextrose monohydrate | 73% |
| Dehydrated glucose syrup | 16% |
| Low fat cocoa | 6.3% |
| Icing sugar | 4.7% |

The food preparation was subjected to milling in a centrifugal mill operating at a rotational speed of 8600 rpm and having a grid with 20 x 2 mm holes.

The powders resulting from milling had the following characteristics:
Water activity (a_{w}) : 0.35-0.4
Humidity [(wet weight - dry weight)/dry weight in %]: 7%
Density: 0.8 kg/l
Average granule size: 100 micron

The powders of the food preparation were loaded in the respective dispensers 61 and 65 whereas biscuit fragments were loaded separately into the dispenser 63 of the apparatus 1 described above.

The biscuit fragments each had a substantially cylindrical shape, weighed about 1 g, had a relative humidity of 2% and a_{w} of 0.15.

The dispensing into each of the moulds 9 was carried out so as to successively load about 1.5 g of powders from the dispenser 61, a biscuit fragment of about 1 g from the dispenser 63 and 1.5 g of powders from the dispenser 65.

The moulds 9 each had a chamber for receiving the powders and the biscuit fragments that were semi-spherical in shape with a diameter of 22 mm.

The sintering in the station 6 of the apparatus described above was carried out in the following operative conditions:
- temperature: 68°C
- pressure: 30 bar
- duration of the compression: 90 seconds.

At the end of the sintering a plurality of biscuits were obtained that were removed from the respective moulds.

The aforementioned biscuits were substantially spherical in shape with a diameter of about 22 mm, a weight of about 4 g, relative humidity of 5% and a_{w} = 0.25.

Said biscuits each have a core consisting of a biscuit fragment and a coating consisting of powders of said food preparation sintered with the core. The coating is soluble in normal watery drinks consumed for breakfast such as, for example, milk.

## Claims

1. Confectionery food product comprising a core consisting of bakery product particulate and a food coating of said core, **characterized in that** said food coating is sintered on said core.

2. Confectionery food product according to claim 1, **characterized in that** said food coating is soluble in a watery drink.

3. Confectionery food product according to claim 1 or 2, **characterized in that** the weight ratio of said core to said food coating is between 1:1 and 1:5.

4. Confectionery product according to any one of the previous claims, **characterized in that** said bakery product particulate is a biscuit fragment.

5. Confectionery food product according to any one of the previous claims, **characterized in that** said food coating comprises powders of a food preparation sintered on said core.

6. Confectionery food product according to claim 5, **characterized in that** said food preparation comprises cocoa and sugar.

7. Process for the production of confectionery food products comprising the steps of:
- loading a first dosed amount of a powdered food preparation into a plurality of moulds,
- loading a bakery product particulate of predetermined size into each mould of said plurality of moulds,
- loading a second dosed amount of powders of said food preparation into said plurality of moulds on said bakery product particulates,
- forming a plurality of confectionery products by sintering of said powders of the food preparation on said bakery product particulates in the respective moulds.

8. Process according to claim 7, wherein said bakery product particulate is a biscuit fragment.

9. Process according to claim 7 or 8, wherein said food preparation is soluble in a watery drink.

10. Process according to claim 9, wherein said food preparation comprises cocoa and sugar.

11. Process according to any one of the previous claims from 7 to 10, wherein said forming by sintering is carried out at a pressure of between 10 and 30 bar and at a temperature not higher than 70°C.

12. Process according to claim 11, wherein said sintering temperature is between 40 and 70°C.

13. Process according to any one of the previous claims from 7 to 12, wherein said sintering is carried out for a time of between 10 seconds and 120 seconds.

14. Process according to any one of the previous claims from 7 to 13, wherein said food preparation is obtained through mixing of the desired powdered ingredients and subsequent milling of the resulting mixture so as to obtain powders of granule size between 50 and 150 micron.

15. Apparatus for the production of confectionery food products (50) comprising:
- a plurality of cross-members (8) each carrying a plurality of moulds (9) in respective seats (15), each cross-member (8) being bound and conveyed by chains (3),
- a plurality of dispensers (61, 63, 65) to inject powders (62) of a food preparation and a bakery product particulate (64) in each of said moulds (9),
- a sintering station (6) comprising means (20, 26) for compressing said powders (62) of a food preparation and said bakery product particulates (64) in the respective moulds (9), thus obtaining said confectionery products (50),
- means (40) for extracting said confectionery products from the respective moulds (9).

16. Apparatus according to claim 15, wherein said means (20, 26) for compressing said powders (62) of a food preparation and said bakery product particulates (64) comprise:
- a plurality of counter moulds (20), one for each mould (9), arranged in series and elastically supported, by elastic means (21), on a frame (22) of said sintering station (6), said counter moulds (20) being vertically mobile between a rest position in which they are in a predetermined spaced relationship from respective moulds (9) of a cross-member (8) situated in said sintering station (6) and an operative position in which they are positioned closed onto said moulds (9), and
- a plurality of pushers (26), one for each counter mould (20), arranged in series and elastically supported, by elastic means (26), on a frame (28) of said sintering station (6), said pushers (26) being vertically mobile between a rest position in which they are in a predetermined spaced relationship from respective counter moulds (20) and an operative position in which they abut with a predetermined amount of pressure on said counter moulds (20) taken to their operative state, said counter moulds (20) in their operative state in turn abutting with pressure on said moulds (9) conferring inside them said compression of said powders (62) of a food preparation and said bakery product particulates (64).

17. Apparatus according to claim 15 or 16, wherein said moulds (9) each comprise a substantially cup-shaped portion (10) in which an open chamber (11) is formed to receive said powders (62) of a food preparation and said bakery product particulate (64), and a stem (12) that extends below said cup-shaped portion (10) terminating with a stop (13).

18. Apparatus according to claim 17, wherein each cup-shaped portion of a mould (9) is housed in a respective seat (15) of a cross-member (8) whereas each stem (12) extends below said seat (15) passing through a bore made on its bottom.

19. Apparatus according to claim 18, wherein each seat (15) of a portion (10) of a mould (9) is countersunk at the bottom so as to form a deposit space (15a) for said powders (62) of a food preparation.

20. Apparatus according to any one of claims 15 to 19, wherein said cross-members (8) are made from anticorodal aluminium.

21. Apparatus according to any one of claims 17 to 19, wherein said moulds (9) are made in bronze with the inner walls of said open chambers (11) coated with a layer of non-stick material for foods, preferably Teflon.

22. Apparatus according to any one of claims 17 to 21, wherein said counter moulds (20) each comprise a cup-shaped portion (20a) facing towards a corresponding cup-shaped portion (10) of a mould (9), and a stem (20b) extending away from said cup-shaped portion (20a), each cup-shaped portion (20a) of a counter mould (20) having an open chamber (23) that together with a chamber (11) of a respective mould (9) creates a closed compression chamber of said powders (62) of a food preparation and said bakery product particulate (64) when said pushers (26) are taken into their operative condition in abutment with pressure on the respective counter moulds (20).

23. Apparatus according to any one of claims 17 to 22, wherein said means (40) for the extraction of said confectionery products from the respective moulds (9) comprise at least one pair of juxtaposed plates (41) associated with each cross-member (8) on the side opposite the seats (15) of the respective moulds (9), said at least one pair of plates (41) extending in the direction of longitudinal extension of the respective cross-members (8) and being vertically mobile between a raised rest position and a lowered operative position in which they go into percussion against moulds (9) containing said confectionery products.

24. Apparatus according to claim 23, wherein said means (40) for the extraction of said confectionery products are actuated so that said at least one pair of juxtaposed plates (41) associated with a cross-member (8) situated on upper tracks (3a) of said chains (3) at the level of the sintering station (6) goes into percussion against plates (13) of overturned moulds (9) containing said confectionery products of an underlying cross-member (8) situated on lower tracks (3b) of said chains (3).

25. Apparatus according to any one of claims 15 to 24, further comprising means (54) for keeping the sintering station (6) at a predetermined operative temperature.

26. Apparatus according to any one of claims 15 to 25, further comprising a vertically mobile frame (35) provided with a plank (38) that extends transversal to the chains (3) to support moulds (9) of cross-members (8) during sintering.

27. Apparatus according to any one of claims 17 to 26, wherein said sintering station (6) comprises a plurality of substantially T-shaped rod-shaped elements (43) arranged in series and having a free end portion situated between stems (12) of moulds (9) of a cross-member (8) situated in said sintering station (6) said rod-shaped elements (43) being vertically mobile between a raised rest position and a lowered operative position in which they hook stops (13) of said moulds (9) pulling them down into the respective seats (15).

28. Apparatus according to any one of claims 22 to 27, wherein said moulds (9) and/or said counter moulds (20) have shapes (51) in relief formed in the respective open chambers (11, 23).

## Patentansprüche

1. Süßwarenprodukt, umfassend einen Innenteil, der aus Backwarenteilchen besteht, und einen Nahrungsüberzug für den Innenteil, **dadurch gekennzeichnet, dass** der Nahrungsüberzug auf den Innenteil gesintert wird.

2. Süßwarenprodukt nach Anspruch 1, **dadurch gekennzeichnet, dass** der Nahrungsüberzug in einem Wassergetränk löslich ist.

3. Süßwarenprodukt nach Anspruch 1 oder 2, **dadurch gekennzeichnet, dass** das Gewichtsverhältnis des Innenteils zum Nahrungsüberzug zwischen 1:1 und 1:5 liegt.

4. Süßwarenprodukt nach einem der vorhergehenden Ansprüche, **dadurch gekennzeichnet, dass** das Backwarenteilchen ein Keksstück ist.

5. Süßwarenprodukt nach einem der vorhergehenden Ansprüche, **dadurch gekennzeichnet, dass** der Nahrungsüberzug Pulver eines Nahrungspräparats umfasst, die auf den Innenteil gesintert sind.

6. Süßwarenprodukt nach Anspruch 5, **dadurch gekennzeichnet, dass** das Nahrungspräparat Kakao und Zucker umfasst.

7. Verfahren zur Herstellung von Süßwarenprodukten, umfassend die Schritte:
- Zuführen einer ersten dosierten Menge eines gepulverten Nahrungspräparats in mehrere Formen,
- Zuführen von Backwarenteilchen vorbestimmter Größe in jede Form der mehreren Formen,
- Zuführen einer zweiten dosierten Pulvermenge des Nahrungspräparats in die mehreren Formen auf die Backwarenteilchen,
- Bilden von mehreren Süßwarenprodukten durch Sintern der Pulver des Nahrungspräparats auf die Backwarenteilchen in den jeweiligen Formen.

8. Verfahren nach Anspruch 7, wobei das Backwarenteilchen ein Keksstück ist.

9. Verfahren nach Anspruch 7 oder 8, wobei das Nahrungspräparat in einem Wassergetränk löslich ist.

10. Verfahren nach Anspruch 9, wobei das Nahrungspräparat Kakao und Zucker umfasst.

11. Verfahren nach einem der vorhergehenden Ansprüche von 7 bis 10, wobei das Bilden durch Sintern bei einem Druck zwischen 10 und 30 bar und bei einer Temperatur von nicht über 70°C erfolgt.

12. Verfahren nach Anspruch 11, wobei die Sintertemperatur zwischen 40 und 70°C beträgt.

13. Verfahren nach einem der vorhergehenden Ansprüche von 7 bis 12, wobei das Sintern für eine Zeit zwischen 10 Sekunden und 120 Sekunden durchgeführt wird.

14. Verfahren nach einem der vorhergehenden Ansprüche von 7 bis 13, wobei das Nahrungspräparat durch Mischen der gewünschten pulverförmigen Inhaltsstoffe und anschließendes Mahlen des sich ergebenden Gemischs erhalten wird, um so Pulver mit einer Körnchengröße zwischen 50 und 150 µm zu erhalten.

15. Vorrichtung zur Herstellung von Süßwarenprodukten (50), umfassend:
- mehrere Querträger (8), die jeweils mehrere Formen (9) in jeweiligen Sitzen (15) tragen, wobei jeder Querträger (8) von Ketten (3) gehalten und befördert wird,
- mehrere Abgabeeinrichtungen (61, 63, 65) zum Injizieren von Pulvern (62) eines Nahrungspräparats und eines Backwarenteilchens (64) in jede der Formen (9),
- eine Sinterstation (6), umfassend Mittel (20, 26) zum Komprimieren der Pulver (62) eines Nahrungspräparats und der Backwarenteilchen (64) in den jeweiligen Formen (9), um so die Süßwarenprodukte (50) zu erhalten,
- Mittel (40) zum Entnehmen der Süßwarenprodukte aus den jeweiligen Formen (9).

16. Vorrichtung nach Anspruch 15, wobei die Mittel (20, 26) zum Komprimieren der Pulver (62) eines Nahrungspräparats und der Backwarenteilchen (64) umfassen:
- mehrere Gegenformen (20), eine für jede Form (9), die in Reihe angeordnet sind und von federnden Mitteln (21) auf einem Rahmen (22) der Sinterstation (6) federnd gehalten werden, wobei die Gegenformen (20) zwischen einer Ruheposition, in der sie sich in einem vorbestimmten Abstand von den jeweiligen Formen (9) eines in der Sinterstation (6) angeordneten Querträgers (8) befinden, und einer Betriebsposition, in der sie formschlüssig auf den Formen (9) angeordnet sind, vertikal beweglich sind, und
- mehrere Schieber (26), einen für jede Gegenform (20), die in Reihe angeordnet sind und von federnden Mitteln (26) auf einem Rahmen (28) der Sinterstation (6) federnd gehalten werden, wobei die Schieber (26) zwischen einer Ruheposition, in der sie sich in einem vorbestimmten Abstand von den jeweiligen Gegenformen (20) befinden, und einer Betriebsposition, in der sie mit einem vorbestimmten Betrag an Druck an den in ihren Betriebszustand versetzten Gegenformen (20) anliegen, vertikal beweglich sind, wobei die Gegenformen (20) in ihrem Betriebszustand wiederum mit Druck an den Formen (9) anliegen, die in ihrem Inneren die Pulver (62) eines Nahrungspräparats und der Backwarenteilchen (64) komprimieren.

17. Vorrichtung nach Anspruch 15 oder 16, wobei die Formen (9) jeweils einen im Wesentlichen becherförmigen Abschnitt (10), in dem eine offene Kammer (11) ausgebildet ist, um die Pulver (62) eines Nahrungspräparats und des Backwarenteilchens (64) aufzunehmen, und einen Schaft (12) umfassen, der sich unter dem becherförmigen Abschnitt (10) erstreckt und mit einem Anschlag (13) abschließt.

18. Vorrichtung nach Anspruch 17, wobei jeder becherförmige Abschnitt einer Form (9) in einem jeweiligen Sitz (15) eines Querträgers (8) aufgenommen ist, während jeder Schaft (12) sich unter den Sitz (15) erstreckt und durch ein Loch in dessen Boden hindurchgeht.

19. Vorrichtung nach Anspruch 18, wobei jeder Sitz (15) eines Abschnitts (10) einer Form (9) im Boden eingelassen ist, um so einen Ablageraum (16a) für die Pulver (62) eines Nahrungspräparats zu bilden.

20. Vorrichtung nach einem der Ansprüche 15 bis 19, wobei die Querträger (9) aus Anticorodal-Aluminium bestehen.

21. Vorrichtung nach einem der Ansprüche 17 bis 19, wobei die Formen (9) aus Bronze gemacht sind, wobei die Innenwände der offenen Kammern (11) mit einer Schicht aus beschichtetem Material für Nahrungsmittel, vorzugsweise Teflon, überzogen sind.

22. Vorrichtung nach einem der Ansprüche 17 bis 21, wobei die Gegenformen (20) jeweils einen becherförmigen Abschnitt (20a), der einem entsprechenden becherförmigen Abschnitt (10) einer Form (9) zugewandt ist, und einen Schaft (20b), der sich vom becherförmigen Abschnitt (20a) weg erstreckt, umfassen, wobei jeder becherförmige Abschnitt (20a) einer Gegenform (20) eine offene Kammer (23) aufweist, die zusammen mit einer Kammer (11) einer jeweiligen Form (9) eine geschlossene Kompressionskammer für die Pulver (62) eines Nahrungspräparats und des Backwarenteilchens (64) erzeugt, wenn die Schieber (26) in ihren Betriebszustand gebracht werden, in dem sie sich mit Druck an den jeweiligen Gegenformen (20) in Widerlager befinden.

23. Vorrichtung nach einem der Ansprüche 17 bis 22, wobei die Mittel (40) zur Entnahme der Süßwarenprodukte aus den jeweiligen Formen (9) mindestens ein Paar von nebeneinander angeordneten Platten (41) umfassen, die mit jedem Querträger (9) auf der Seite gegenüber den Sitzen (15) der jeweiligen Formen (9) verbunden sind, wobei sich das mindestens eine Paar von Platten (41) in der Richtung der Längsausdehnung der jeweiligen Querträger (7) erstreckt und vertikal zwischen einer erhöhten Ruheposition und einer abgesenkten Betriebsposition beweglich ist, in der sie gegen die die Süßwarenprodukte enthaltenden Formen (9) stoßen.

24. Vorrichtung nach Anspruch 23, wobei die Mittel (40) zur Entnahme der Süßwarenprodukte so betätigt werden, dass das mindestens eine Paar von nebeneinander angeordneten Platten (41), die mit einem Querträger (8) verbunden sind, der auf oberen Führungen (3a) der Ketten (3) auf der Höhe der Sinterstation (6) angeordnet ist, gegen die Platten (13) der gestürzten, die Süßwarenprodukte enthaltenden Formen (9) eines zu Grunde liegenden Querträgers (8) schlägt, der auf unteren Führungen (3b) der Ketten (3) angeordnet ist.

25. Vorrichtung nach einem der Ansprüche 15 bis 24, weiter umfassend Mittel (54) zum Halten der Sinterstation (6) bei einer vorbestimmten Betriebstemperatur.

26. Vorrichtung nach einem der Ansprüche 15 bis 25, weiter umfassend einen vertikal beweglichen Rahmen (35), der der mit einem Brett (38) versehen ist, das sich quer zu den Ketten (3) erstreckt, um die Formen (9) der Querträger (8) während des Sinterns zu stützen.

27. Vorrichtung nach einem der Ansprüche 17 bis 26, wobei die Sinterstation (6) mehrere im Wesentlichen T-förmige stabförmige Elemente (43) umfasst, die in Reihe angeordnet sind und einen freien Endabschnitt aufweisen, der zwischen den Schäften (12) der Formen (9) eines Querträgers (8) angeordnet sind, der sich in der Sinterstation (6) befindet, wobei die stabförmigen Elemente (43) zwischen einer erhöhten Ruheposition und einer abgesenkten Betriebsposition vertikal beweglich sind, in der sie Anschläge (13) der Formen (9) anhaken und diese nach unten in die jeweiligen Sitze (15) ziehen.

28. Vorrichtung nach einem der Ansprüche 22 bis 27, wobei die Formen (9) und/oder die Gegenformen (20) eine dreidimensionale Gestalt (51) aufweisen, die in den jeweiligen offenen Kammern (11, 23) ausgebildet ist.

## Revendications

1. Produit alimentaire de confiserie comprenant un noyau composé de particules de produit de boulangerie et un revêtement alimentaire du dit noyau, **caractérisé en ce que** le dit revêtement alimentaire est fritté sur le dit noyau.

2. Produit alimentaire de confiserie selon la revendication 1, **caractérisé en ce que** le dit revêtement alimentaire est soluble dans une boisson aqueuse.

3. Produit alimentaire de confiserie selon la revendication 1 ou 2, **caractérisé en ce que** le rapport de poids entre le dit noyau et le dit revêtement alimentaire est compris entre 1 :1 et 1 :5.

4. Produit alimentaire de confiserie selon l'une quelconque des revendications précédentes, **caractérisé en ce que** les dites particules de produit de boulangerie sont des fragments de biscuit.

5. Produit alimentaire de confiserie selon l'une quelconque des revendications précédentes, **caractérisé en ce que** le dit revêtement alimentaire comprend des poudres d'une préparation alimentaire frittées sur le dit noyau.

6. Produit alimentaire de confiserie selon la revendication 5, **caractérisé en ce que** la dite préparation alimentaire comprend du cacao et du sucre.

7. Procédé de production de produits alimentaires de confiserie comprenant les étapes de :
- charger une première quantité dosée d'une préparation alimentaire en poudre dans une pluralité de moules,
- charger des particules de produit de boulangerie de taille prédéterminée dans chaque moule de la dite pluralité de moules,
- charger une deuxième quantité dosée de poudres de la dite préparation alimentaire dans la dite pluralité de moules sur les dites particules de produit de boulangerie,
- former une pluralité de produit de confiserie en frittant les dites poudres de la préparation alimentaire sur les dites particules de produit de boulangerie dans les moules respectifs.

8. Procédé selon la revendication 7, **caractérisé en ce que** la dite particule de produit de boulangerie est un fragment de biscuit.

9. Procédé selon la revendication 7 ou 8, **caractérisé en ce que** la dite préparation alimentaire est soluble dans une boisson aqueuse.

10. Procédé selon la revendication 9, **caractérisé en ce que** la dite préparation alimentaire comprend du cacao et du sucre.

11. Procédé selon l'une quelconque des revendications 7 à 10 précédentes, **caractérisé en ce que** la dite formation par frittage est réalisée à une pression comprise entre 10 et 30 bar et à une température ne dépassant pas 70°C.

12. Procédé selon la revendication 11, **caractérisé en ce que** la dite température de frittage est comprise entre 40 et 70°C.

13. Procédé selon l'une quelconque des revendications 7 à 12 précédentes, **caractérisé en ce que** le dit frittage est réalisé pendant un temps compris entre 10 et 120 secondes.

14. Procédé selon l'une quelconque des revendications 7 à 13 précédentes, **caractérisé en ce que** la dite préparation alimentaire est obtenue en mélangeant les ingrédients en poudre désirés et en moulant ensuite le mélange résultant de façon à obtenir des poudres de granulation comprise entre 50 et 150 microns.

15. Appareil pour la production de produits alimentaires de confiserie (50) comprenant :
- une pluralité de traverses (8) portant chacune une pluralité de moules (9) dans des sièges respectifs (15), chaque traverse (8) étant liée et convoyée par des chaînes (3),
- une pluralité de distributeurs (61, 63, 65) pour injecter des poudres (62) d'une préparation alimentaire et une particule de produit de boulangerie (64) dans chacun des dits moules (9),
- une station de frittage (6) comprenant un moyen (20, 26) pour comprimer les dites poudres (62) d'une préparation alimentaire et les dites particules de produit de boulangerie (64) dans les moules respectifs (9) obtenant ainsi les dits produits de confiserie (50),
- un moyen (40) d'extraction des dits produits de confiserie des moules respectifs (9).

16. Appareil selon la revendication 15, **caractérisé en ce que** les dits moyens (20, 26) de compression des dites poudres (62) d'une préparation alimentaire et des dites particules de produit de boulangerie (64) comprend :
- une pluralité de contre moules (20), un pour chaque moule (9) placés en série et supportés de manière élastique, par un moyen élastique (21) sur un cadre (22) de la dite station de frittage (6), les dits contre moules (20) étant mobiles verticalement entre une position de repos dans laquelle ils sont dans un rapport d'écartement prédéterminé avec les moules respectifs (9) d'une traverse (8) situé dans la dite station de frittage (6) et une position de fonctionnement dans laquelle elles sont situées à proximité des dits moules (9), et
- une pluralités de poussoirs (26), un pour chaque contre moule (20) placés en série et supportés de manière élastique, par un moyen élastique (26) sur un cadre (28) de la dite station de frittage (6), les dits poussoirs (26) étant mobiles verticalement entre une position de repos dans laquelle ils sont dans un rapport d'écartement prédéterminé avec les contre moules (20) dans leur état de fonctionnement buttant à leur tour avec pression sur les dits moules (9) leur conférant la dite compression des dites poudres (62) d'une préparation alimentaire et des dites particules de produit de boulangerie (64).

17. Appareil selon la revendication 15 ou 16, **caractérisé en ce que** les dits moules (9) comprennent chacun une partie de forme essentiellement de coupe (10) dans laquelle une chambre ouverte (11) est formée pour recevoir les dites poudres (62) d'une préparation alimentaire et la dite particule de produit de boulangerie (64), et une tige (12) qui s'étend sous la dite partie en forme de coupe (10) se terminant avec un butoir (13).

18. Appareil selon la revendication 17, **caractérisé en ce que** chaque partie en forme de coupe d'un moule (9) est logée dans une base respective (15) d'une traverse(8) tandis que chaque tige (12) s'étend sous la dite base (15) passant à travers un trou fait dans son fond.

19. Appareil selon la revendication 18, **caractérisé en ce que** chaque base (15) d'une partie (10) d'un moule (9) est fraisée au fond de façon à former un espace de dépôt (15a) pour les dites poudres (62) d'une préparation alimentaire.

20. Appareil selon l'une quelconque des revendications 15 à 19, **caractérisé en ce que** les dites traverses(8) sont faites d'aluminium anticorrosif.

21. Appareil selon l'une quelconque des revendications 17 à 19, **caractérisé en ce que** les dits moules (9) sont faits de bronze avec les parois internes des dites chambres ouvertes (11) revêtues d'une couche de matériau anti-adhésif pour les aliments, de préférence du Téflon.

22. Appareil selon l'une quelconque des revendications 17 à 21, **caractérisé en ce que** les dits contre moules (20) comprennent chacun une partie en forme de coupe (20a) faisant face à une partie correspondante en forme de coupe (10) d'un moule (9) et une tige (20b) s'étendant de la dite partie en forme de coupe (20a), chaque partie en forme de coupe (20a) d'un contre moule (20) ayant une chambre ouverte (23) qui avec une chambre (11) d'un moule respectif (9) crée une chambre de compression fermée des dites poudres (62) d'une préparation alimentaire et la dite particule de produit de boulangerie (64) quand les dits poussoirs (26) sont placés dans leur état fonctionnel en butée avec pression sur les contre moules respectifs (20).

23. Appareil selon l'une quelconque des revendications 17 à 22, **caractérisé en ce que** les dits moyens (40) d'extraction des dits produits de confiserie des moules respectifs (9) comprennent au moins une paire de plaques juxtaposées (41) associée avec chaque élément traversant (8) du côté opposé aux bases (15) des moules respectifs (9), la dite au moins une paire de plaques (41) s'étendant dans la direction de l'extension longitudinale des traverses respectives (8) et étant mobile verticalement entre une position de repos relevée et une position opérationnelle abaissée dans laquelle ils vont en percussion contre les moules (9) contenant les dits produits de confiserie.

24. Appareil selon la revendication 23, **caractérisé en ce que** les dits moyens (40) d'extraction des dits produits de confiserie sont activés de façon à ce que la dite au moins une paire de plaques juxtaposées (41) associées avec un élément traversant (8) située sur les voies supérieures (3a) des dites chaînes (3) au niveau de la station de frittage (6) va percuter les plaques (13) de moules retournés (9) contenant les dits produits de confiserie d'une traverse sous-jacente (8) située sur les voies inférieures (3b) des dites chaînes (3).

25. Appareil selon l'une quelconque des revendications 15 à 24, comprenant de plus des moyens (54) de maintenir la station de frittage (6) à une température de fonctionnement prédéterminée.

26. Appareil selon l'une quelconque des revendications 15 à 25, comprenant de plus un cadre mobile verticalement (35) pourvu d'une planche (38) qui s'étend transversale aux chaînes (3) pour supporter les moules (9) des traverses (8) pendant le frittage.

27. Appareil selon l'une quelconque des revendications 17 à 26, **caractérisé en ce que** la dite station de frittage (6) comprend une pluralité d'éléments (43) en forme de tige essentiellement en forme de T placés en série et ayant une partie terminale libre située entre les tiges (12) des moules (9) d'une traverse (8) située dans la dite station de frittage (6) les dits éléments en forme de tige (43) étant mobiles verticalement entre une position de repos relevée et une position de fonctionnement abaissée dans laquelle ils accrochent des butées (13) des dits moules (9) les tirant dans les bases respectives (15).

28. Appareil selon l'une quelconque des revendications 22 à 27, **caractérisé en ce que** les dits moules (9) et/ou les dits contre moules (20) ont des formes en relief (51) formées dans les chambres ouvertes respectives (11, 23).
